Europäisches Patentamt

(19) European Patent Office

Office européen des brevets

(11) Veröffentlichungsnummer: **0 024 478**

**A1**

(12) # EUROPÄISCHE PATENTANMELDUNG

(21) Anmeldenummer: 80102606.3

(22) Anmeldetag: 12.05.80

(51) Int. Cl.³: **G 03 B 17/56**

(30) Priorität: 31.08.79 DE 2935173

(43) Veröffentlichungstag der Anmeldung:
11.03.81 Patentblatt 81/10

(84) Benannte Vertragsstaaten:
AT BE CH DE FR GB IT LI LU NL SE

(71) Anmelder: **Rollei-Werke Franke & Heidecke GmbH + Co KG**
**Salzdahlumer Strasse 196**
**D-3300 Braunschweig(DE)**

(72) Erfinder: **Adamski, Günter**
**Koblenzer Str. 46**
**D-3300 Braunschweig(DE)**

(72) Erfinder: **Mädge, Joachim**
**Köslinstr. 138**
**D-3300 Braunschweig(DE)**

(72) Erfinder: **Prochnow, Claus**
**Lange Str. 38**
**D-3300 Braunschweig(DE)**

(74) Vertreter: **Pretzell, Hellmut, Dipl.-Ing.**
**Salzdahlumer Strasse 196**
**D-3300 Braunschweig(DE)**

(54) **Kamerahandgriff.**

(57) Das mit einer Kamera verbindbare Griffstück (10) weist insgesamt drei Befestigungsaufnahmen auf, in welche wahlweise das Verbindungsglied (11) eingesetzt werden kann. Zwei der Befestigungsaufnahmen sind von den Seitenflächen (15, 16) und eine Befestigungsaufnahme von der oberen Stirnfläche (17) des Griffstücks (10) aus zugänglich. Im Griffstück (10) ist ein Auslöserknopf (19) schwenkbar gelagert und ein mit dem Auslöserknopf (19) gekuppeltes Hebelgetriebe angeordnet, das endseitig in die Befestigungsaufnahmen hineinragt und dort in Wirkeingriff mit dem Stößel des Verbindungsgliedes (11) treten kann. Das Verbindungsgliedes (11) kann als Seitenhalter (58) oder als Tragplatte ausgebildet sein. In allen Fällen wird mit der Befestigung des Handgriffes an dem Kameragehäuse der Auslöserknopf (19) über das Hebelgetriebe und den Stößel in der Tragplatte bzw. dem Seitenhalter (58) automatisch mit dem im Kameragehäuse angeordneten Auslöser oder Auslöserkontakt mechanisch gekoppelt.

Fig. 7

**0024478**

Rollei-Werke

Franke & Heidecke

GmbH & Co KG

3300 Braunschweig

6.8.1979

A 1170

## Kamerahandgriff

Die Erfindung betrifft einen Kamerahandgriff zur lösbaren Verbindung mit einer Kamera nach der Gattung des Hauptanspruchs.

Ein solcher, lösbar mit der Kamera verbundener Handgriff dient der besseren Handhabung der Kamera.

Bei bekannten Handgriffen dieser Art ist das Griffstück an eine bestimmte, für die Aufnahme zweckmäßige Kameralage formgestalterisch angepaßt, damit das Griffstück handgerecht umfaßt werden kann und Handgriff und Kamera längere Zeit ermüdungsfrei und damit ohne Verwacklungsgefahr gehalten werden können.

Nun müssen aber einige Kameras, z.B. Spiegelreflexkameras mit Aufsicht- und Durchsichtsucher, bei der Durchführung einer Aufnahme in unterschiedlichen Positionen gehalten werden. Eine Kamera mit Durchsichtsucher muß unmittelbar bis an das Auge gehoben werden, so daß hierbei nur bei Lage des Griffstücks unterhalb des Kameragehäuses eine ergonomisch günstige Halterung der Kamera möglich ist. Bei Kameras mit Aufsichtsucher hingegen muß der Benutzer von oben auf das Kameragehäuse blicken können. Die Kamera läßt sich hierbei nur ergonomisch dann günstig halten, wenn der Handgriff derart am Kameragehäuse angeordnet ist, daß das Griffstück seitlich des Kameragehäuses liegt. Linkshändige Kamerabenutzer bevorzugen dabei die Anordnung des Griffstücks links neben dem Kameragehäuse, während rechtshändige Kamerabenutzer das Griffstück rechts am Kameragehäuse fordern (jeweils in Richtung zum Aufnahmeobjekt hin gesehen).

Für jede Arte der Kamerahaltung wird bislang ein besonders angepaßter Kamerahandgriff benutzt, bei welchem die jeweils spezielle Ausgestaltung des Griffstücks in der jeweils zugeordneten Kameraposition eine ergonomisch optimale Handhabung gibt.

Es wurde bereits ein Kamerahandgriff vorgeschlagen, dessen Griffstück bei an der Kamera befestigtem Handgriff seitlich neben dem Kameragehäuse angeordnet ist. Das Griffstück kann mittels eines an diesem lösbar befestigten Verbindungsgliedes an dem Kameragehäuse festgelegt werden. Der Kameraauslöser ist auf der Stirnseite des Griffstückes angeordnet und muß mittels des Daumens bedient werden. Dadurch ist es möglich, den Handgriff in zwei verschiedenen Positionen am Kameragehäuse zu befestigen, wobei in der einen Position das Griffstück rechts und in der anderen Position das Griffstück links vom Kameragehäuse liegt. Dieser Handgriff läßt sich also bei einer Kamera mit Aufsichtsucher sowohl von dem links- als auch dem rechtshändigen Kamerabenutzer gebrauchen, wobei allerdings die Bedienung des Auslöserknopfes mit dem Daumen, anstelle der üblicherweise gewohnten Bedienung des Kameraauslösers mit dem Zeigefinger, dem Kamerabenutzer zu einer zunächst störenden Umgewöhnung zwingt. Dieser Handgriff läßt sich allerdings nicht mehr verwenden, wenn der Kamerabenutzer die Kamera, die - wie heute schon üblich - zusätzlich mit einem Durchsichtsucher ausgerüstet ist, zur Aufnahme in einer Position halten will, die den Gebrauch des Durchsichtsuchers ermöglicht. Hier ist der Kamerabenutzer gezwungen, den Handgriff vollständig zu entfernen und entweder die Kamera am Kameragehäuse zu halten oder sich für diesen Zweck mit einem weiteren Kamerahandgriff auszustatten.

Der Erfindung liegt daher die Aufgabe zugrunde, einen Handgriff der eingangs genannten Art zu schaffen, der die Halterung der Kamera in allen möglichen Positionen erlaubt, also die Halterung der Kamera mit unter dem Kameragehäuse-boden liegendem Griffstück oder mit neben dem Kameragehäuse seitlich links oder rechts angeordnetem Griffstück.

Diese Aufgabe ist bei einem Kamerahandgriff der im Oberbegriff des Anspruchs 1 definierten Gattung erfindungsgemäß durch die Merkmale im Kennzeichnungsteil des Anspruchs 1 gelöst. Der erfindungsgemäße Kamerahandgriff ermöglicht nicht nur die Halterung einer Kamera mit Aufsicht- und Durchsichtsucher in allen notwendigen Aufnahmepositionen in ergonomisch vorteilhafter Weise für Rechts- und Linkshänder, sondern kann auch ohne weiteres, gegebenenfalls unter geringfügiger, vom Kamerabenutzer selbst vornehmbarer Anpassung an verschiedenen Kameramodellen benutzt werden, wobei er auch hier eine ergonomisch optimale Haltung der Kamera in Aufnahmeposition gewährleistet.

Eine besonders vorteilhafte Ausführungsform der Erfindung ergibt sich dabei aus Anspruch 4. Durch diese Maßnahmen ist der am Griffstück angeordnete Auslöserknopf, mittels dessen üblicherweise die Kamera ausgelöst wird, in allen möglichen Positionen des Griffstücks voll funktionsfähig und liegt in allen Positionen des Griffstücks immer an der zum Aufnahmeobjekt hin weisenden Frontseite des Griffstücks und kann in gewohnter und ergonomisch günstiger Weise mit dem Zeigefinger bedient werden. Darüberhinaus ist durch einfaches Ansetzen an das und Festlegen an dem Kameragehäuse die Übertragung der Kameraauslösefunktion von dem Auslöserknopf auf den Auslöserkontakt oder den Auslöser der Kamera automatisch sichergestellt.

Eine vorteilhafte Ausführungsform der Erfindung ergibt sich auch aus Anspruch 6, insbesondere in Verbindung mit Anspruch 7. Durch diese Ausgestaltung des Hebelgetriebes und der Befestigungsaufnahmen läßt sich sowohl das Hebelgetriebe als auch das Griffstück selbst recht kostengünstig fertigen, so daß der Handgriff ein preisgünstiges Zubehör darstellt, der aufgrund seines Preises auch für den Fotoamateur interessant ist.

Vorteilhaft ist auch die Ausführungsform der Erfindung gemäß Anspruch 8. Durch die Ausbildung des Verbindungsgliedes als T-förmiger Seitenhalter läßt sich der Handgriff derart ausgestalten, daß bei seiner Befestigung mit dem Kameragehäuse das Griffstück wahlweise links oder rechts seitwärts des Kameragehäuses zu liegen kommt. Mit Festlegen des Handgriffs am Kameragehäuse steht auch gleichzeitig der im Seitenhalter geführte Stößel mit dem Auslöser oder dem Auslösekontakt in mechanischer Verbindung und übersetzt die Bewegung des Auslöserknopfes im Griffstück in eine Betätigung des Auslösers oder des Auslösekontakts im Kameragehäuse. Die im Querteil des Seitenhalters vorgesehene Längsbohrung mit Innengewinde ermöglicht das Ansetzen von weiteren Haltegliedern, die eine individuelle Anpassung des Handgriffs an die Form des Kameragehäuses ermöglichen.

Vorteilhaft ist dabei auch die Ausführungsform der Erfindung nach Anspruch 9, die dort vorgesehenen Formmulden und/oder Formnasen stellen eine verdrehsichere Verbindung zwischen Seitenhalter und weiteren Haltegliedern sicher.

Eine vorteilhafte Ausführungsform der Erfindung ergibt sich aus Anspruch 10. Durch die erfindungsgemäße Ausgestaltung des Verbindungsgliedes zwischen Griffstück und Kameragehäuse als Tragplatte läßt sich der Handgriff so an dem Kameragehäuse befestigen, daß das Griffstück unmittelbar unterhalb des Kameragehäusebodens liegt und damit direkt unter dem Schwerpunkt der Kamera. Auch hier wird durch einfaches Ansetzen der Tragplatte an den Gehäuseboden der Kamera, was im übrigen mittels der Stativschraube erfolgt, die mechanische Ankopplung des Auslöserknopfes im Griffstück an den Auslöser oder Auslösekontakt im Kameragehäuse durch den in dem Bolzen geführten Stößel automatisch sichergestellt.

Eine bevorzugte Ausführungsform der Erfindung zeichnet sich dadurch aus, daß der Bolzen vorzugsweise mittels eines Schraubgewindes in der Tragplatte lösbar gehalten ist. Durch diese Maßnahme ist es möglich, den Bolzen von der Tragplatte zu entfernen und diese als reine Befestigungsplatte in Verbindung mit dem aus Griffstück und Seitenhalter zusammengesetzten Handgriff zu verwenden.

Gemäß einer weiteren Ausführungsform der Erfindung ist dabei vorgesehen, daß die Tragplatte quer abstehende Höcker trägt, die jeweils eine zum Durchführen einer Steckschraube bestimmte axiale Durchgangsbohrung und Formnasen und/oder Formmulden aufweisen, die in die Formmulden und Formnasen des Seitenhalters formschlüssig eingreifen. Durch diese Ausgestaltung der Tragplatte kann diese - wie vorstehend erwähnt - mit dem Seitenhalter verbunden werden. Hierzu ist eine Steckschraube durch die axiale Durchgangsbohrung eines Höckers hindurchzuführen und in dem Innengewinde des Querteils des Seitenhalters zu verschrauben. Die dabei ineinander eingreifenden Formnasen und/oder Formmulden auf dem Höcker und auf der Stirnseite des Querteils des Seitenhalters ermöglichen dabei eine verdrehfeste Verbindung.

Eine weitere vorteilhafte Ausführungsform der Erfindung weist mindestens ein, vorzugsweise der Verlängerung des Querteils des Seitenhalters dienendes, Ansatzstück auf, das eine zum Durchführen einer Steckschraube bestimmte axiale Durchgangsbohrung und Formnasen und/oder Formmulden aufweist, die in die Formmulden und/oder Formnasen des Seitenhalters formschlüssig eingreifen. Auf diese Weise kann der Querteil des Seitenhalters z.B. über die Kameraoberseite hinaus verlängert werden, so daß hier noch weitere Zusatzgeräte, wie z.B. ein Blitzgerät, befestigt werden können.

In einer weiteren Ausführungsform der Erfindung weist der Handgriff mindestens eine Querschiene mit zwei jeweils endseitig quer abstehenden Höckern auf, die jeweils eine zum Durchführen einer Steckschraube bestimmte axiale Durchgangsbohrung und Formnasen und/oder Formmulden aufweisen, die in die Formmulden und/oder Formnasen von Tragplatte und/oder Ansatzstück formschlüssig eingreifen. Eine solche Querschiene kann mit einem Höcker auf die Stirnseite eines Ansatzstückes aufgesetzt werden und mittels einer durch den Höcker und durch das Ansatzstück bis in die Innengewindebohrung des Querteils des Seitenhalters geführte Steckschraube an dem Seitenhalter befestigt werden. Eine solche Querschiene dient zur Aufnahme weiterer Zusatzgeräte für die Kameraufnahme, z.B. Blitzlichtgerät, Lichtmeßsensor etc.

Nach einer weiteren Ausführungsform der Erfindung ist der Handgriff dadurch gekennzeichnet, daß die Querschiene zur Befestigung eines Blitzschuhs dienende Aufnahmelöcher, vorzugsweise Gewindelöcher, aufweist.

Gemäß einer weiteren Ausführungsform der Erfindung weist der Handgriff mindestens ein Distanzstück mit einer vorzugsweise ein Innengewinde tragenden Durchgangsbohrung und mit stirnseitigen Formnasen und/oder Formmulden, die in die Formmulden und/oder Formnasen der Querschiene und/oder der Tragplatte formschlüssig eingreifen. Mit diesem Distanzstück läßt sich eine weitergehende Anpassung des Handgriffes an die Kameraform und an die Notwendigkeit, weitere Zusatzgeräte für die Aufnahme mit dem Handgriff halten zu müssen, erzielen.

Bei dem erfindungsgemäßen Handgriff kann man alle Einzelteile, wie Seitenhalter, Tragplatte, Ansatzstück, Distanzstück, Querschiene wahlweise gegenseitig austauschen und/ oder miteinander verbinden. Der Handgriff erhält damit eine variable Form, die es erlaubt, das Griffstück in die eingangs erläuterten drei Positionen am Kameragehäuse anzuordnen, den Gegebenheiten zur Befestigung des Handgriffs am Kameragehäuse bei verschiedenen Kameras Rechnung zu tragen und gleichzeitig Zusatzgeräte an den Handgriff zu montieren, die zur fotografischen Aufnahme eine bestimmte räumliche Beziehung zum Kameraobjektiv aufweisen müssen, wie z. B. ein Blitzlichtgerät oder ein die Blitzlichtabstrahlung steuernder Fotosensor.

Der vollständige Wortlaut der Ansprüche ist vorstehend allein zur Vermeidung unnötiger Wiederholungen nicht wiedergegeben, sondern statt dessen lediglich durch Nennung der Anspruchsnummer darauf Bezug genommen. Hierdurch haben jedoch alle diese Anspruchsmerkmale als an dieser Stelle ausdrücklich und erfindungswesentlich offenbart zu gelten.

Die Erfindung ist anhand von in den Zeichnungen dargestellten Ausführungsbeispielen im folgenden näher beschrieben. Dabei zeigen in perspektivischer Darstellung:

Fig. 1    eine Ansicht eines Kamerahandgriffs von schräg oben-vorn,

Fig. 2    eine Seitenansicht eines Griffstücks des Kamerahandgriffs in Fig. 1,

Fig. 3    eine Draufsicht einer Tragplatte des Kamerahandgriffs in Fig. 1 von schräg oben,

Fig. 4    in vergrößerter Explosionsdarstellung Einzelheiten im Innern des Griffstücks in Fig. 2,

Fig. 5    eine Vorderansicht eines Kamerahandgriffs gemäß einem zweiten Ausführungsbeispiel,

Fig. 6    eine Seitenansicht eines Seitenhalters
des Kamerahandgriffs in Fig. 5 mit längsgeschnittenem Mittelteil,

Fig. 7    eine Vorderansicht eines Kamerahandgriffs
gemäß einem dritten Ausführungsbeispiel.

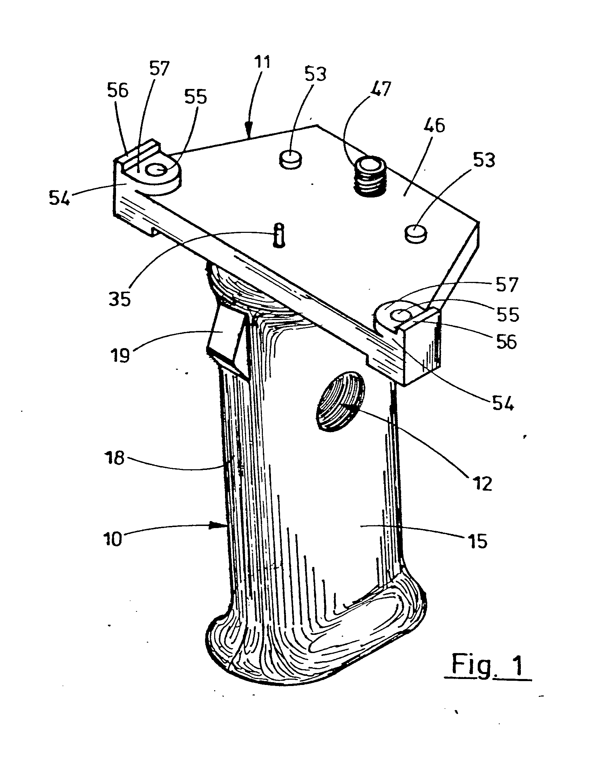

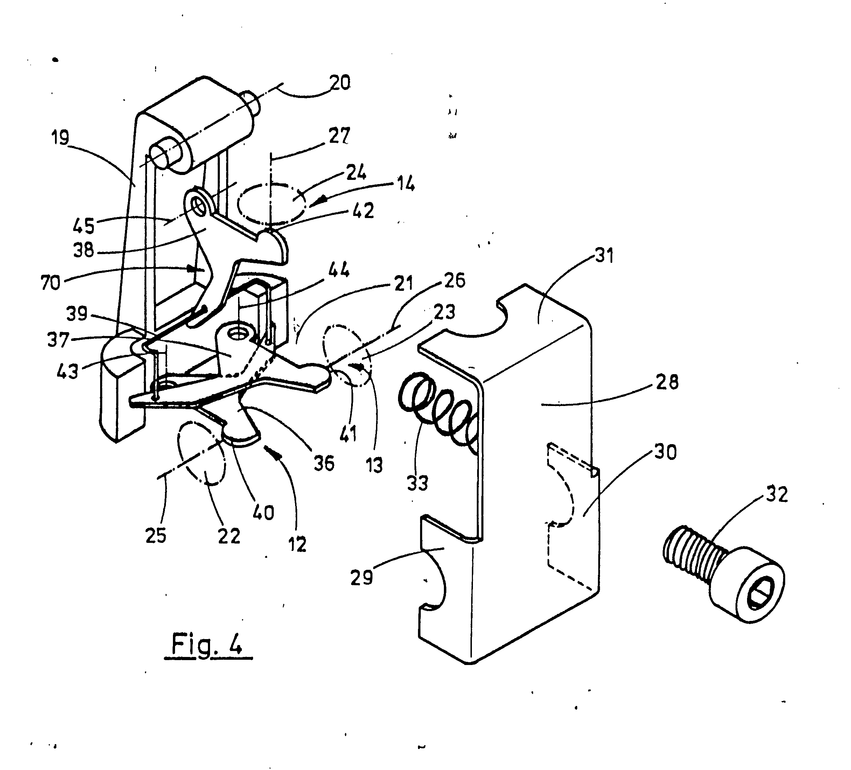

Die in den Fig. 1, 5 und 7 dargestellten Ausführungsbeispiele eines Kamerahandgriffs weisen alle das gleiche,

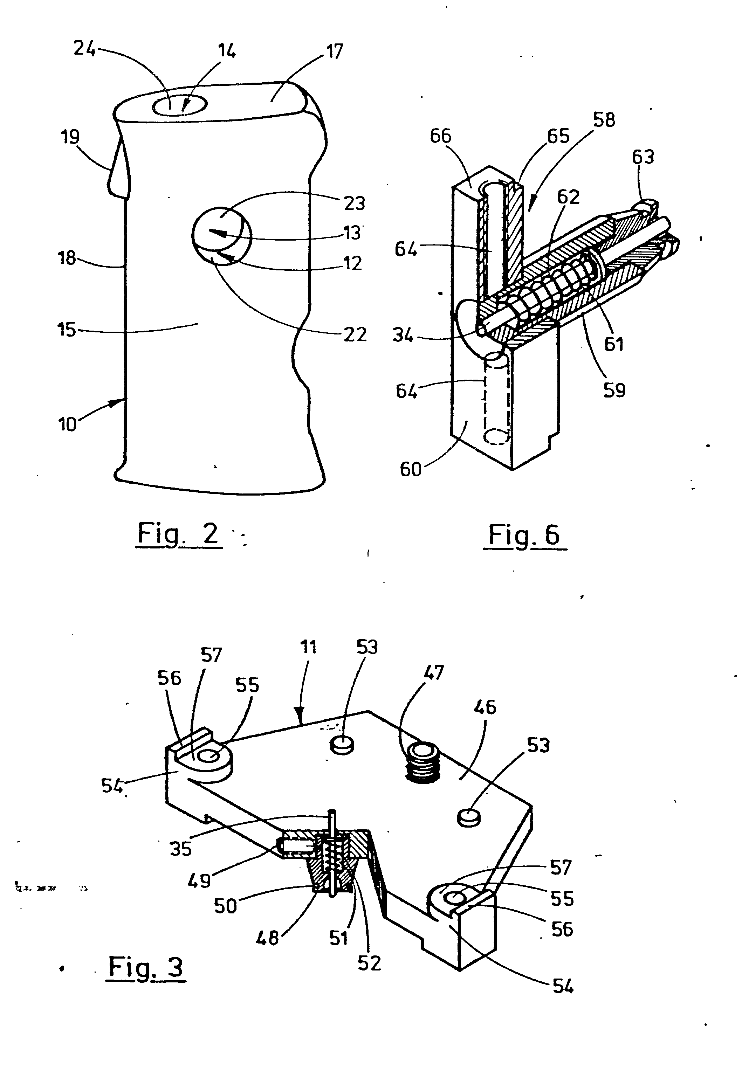

in Fig. 2 separat dargestellte Griffstück 10 und ein
verschiedenartig ausgestaltetes Verbindungsglied  11 auf,
das an dem Kameragehäuse einer Kamera festgelegt werden
kann und das Kameragehäuse mit dem Griffstück 10 und umgekehrt verbindet. Das Verbindunsglied 11 ist lösbar mit dem
Griffstück 10 verbunden. Hierzu weist das Griffstück 10
insgesamt drei Befestigungsaufnahmen 12, 13, 14 auf, in
welche das Verbindungsglied 11 wahlweise eingesteckt und
dort gehalten werden kann. Zwei Befestigungsaufnahmen 12
und 13 sind gegenüberliegend angeordnet und von den Seitenflächen 15,
16 und die dritte Befestigungsaufnahme 14 von der oberen
Stirnfläche 17 des Griffstücks 10 aus zugänglich. Auf der Frontfläche 18 des Griffstücks 10, die bei an die Kamera angesetztem Handgriff immer zum Aufnahmeobjekt hin gerichtet
ist, ist ein Auslöserknopf 19 nahe der oberen Stirnfläche 17
angeordnet. Der als Schwenktaste ausgebildete Auslöserknopf
19 ist schwenkbar um eine Schwenkachse 20 im
Griffstück 10 gehalten (Fig. 4) und steht über die Frontfläche 18 des Griffstücks 10 vor.

Die Befestigungsaufnahmen 12 - 14 weisen einen gemeinsamen
zentralen Hohlraum 21 und jeweils eine in den Hohlraum
mündende Bohrung 22, 23 und 24 zum Einführen des Verbindungsgliedes 11 auf, wobei die Bohrungsachsen 25,26,27 die
Achsen der Befestigungsaufnahmen 12,13,14 bilden. In Fig. 4
ist dieser Hohlraum 21 durch die dort strichpunktiert eingezeichneten Bohrungen 22 - 24 schematisch angedeutet.
Zur Befestigung des Verbindungsgliedes 11 ist im Griffstück 10, und zwar in dessen Hohlraum 21, ein Verriegelungskörper 28
(Fig. 4) angeordnet, der in seiner Verriegelungsstellung
mit Sperrlappen 29,30,31 in die Befestigungsaufnahme 12-14
hineinragt. Die Sperrlappen sind zum Hintergreifen eines
am Verbindungsglied 11 angeordneten Hintergreifungsrandes,
der noch nachfolgend näher ausgeführt werden wird, ausgebildet. In der Verriegelungsstellung schieben sich dabei
die Sperrlappen 29 - 31 des Verriegelungskörpers 28 unmittelbar hinter die Mündung der Bohrungen 22 - 24 im Hohlraum 21
und liegen einerseits an dem Hintergreifungsrand des Verriegelungsgliedes 11 und andererseits an der den Hohlraum 21
umschließenden Wandfläche des Griffstücks 10 an. Damit wird
ein Herausziehen des Verbindungsgliedes 11 aus einer der
Befestigungsaufnahmen 12 - 14 sicher verhindert. Zum Überführen des Verriegelungskörpers 28 in seine Verriegelungsstellung dient eine Stellschraube 32, die in einer nicht dargestellten Gewindebohrung im Griffstück 10 verschraubbar ist
und dabei den Verriegelungskörper 28 in Richtung auf die
Bohrungsachsen 25 - 27 axial verschiebt. Zur Rückstellung
des Verriegelungskörpers 28 aus dieser Verriegelungsstellung
bei gelöster Stellschraube 32 dient eine Rückstellfeder 33,
die als Schraubendruckfeder ausgebildet ist und sich einerseits am Verriegelungskörper 28 und andererseits an einer
den Hohlraum 21 begrenzenden Wand im Griffstück 10 abstützt.

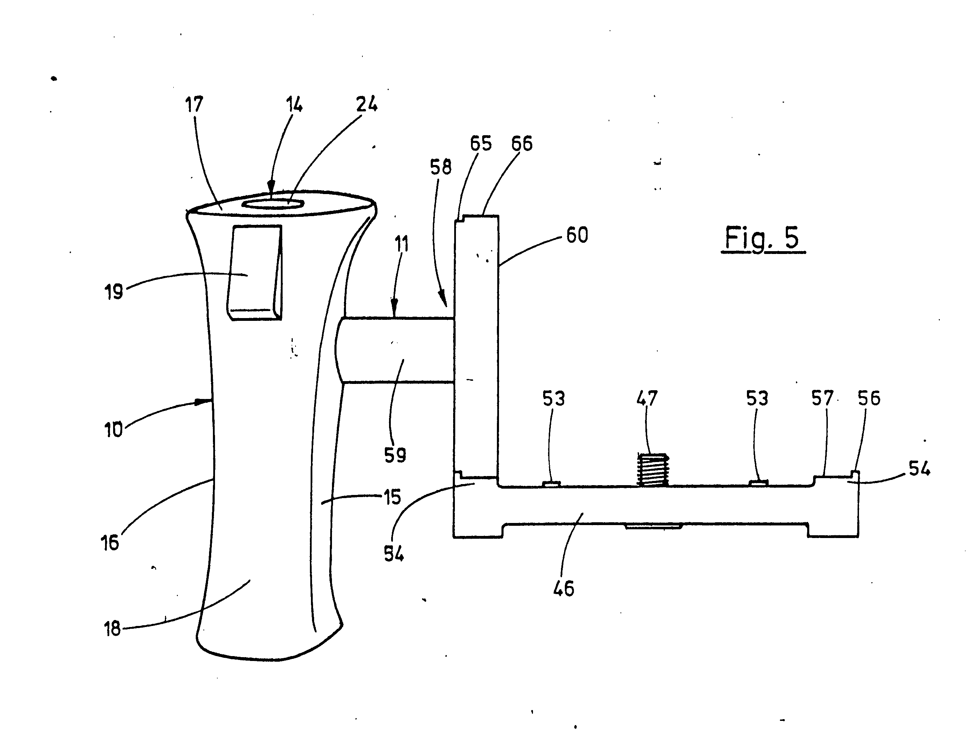

Im Verbindungsglied 11 ist - wie noch im einzelnen erläutert
wird - ein Stößel axial verschieblich gehalten, der die
Schwenkbewegung des Auslöserknopfes 19 auf einem am Kameragehäuse angeordneten, hier nicht dargestellten Auslöser
oder Auslöserkontakt überträgt. Dabei liegt bei nicht betätigtem Auslöserknopf 19 der Stößel kameraseitig unmittelbar
an dem Auslöser oder Auslöserkontakt an, ohne diesen jedoch
mechanisch zu verschieben. Im Griffstück 10, und zwar in
dessen Hohlraum 21 ist nunmehr ein Hebelgetriebe 70 angeordnet,
das die Schwenkbewegung des Auslöserknopfes 19 in eine
axiale Verschiebung des Stößels umsetzt. Der Stößel ist bei der Ausbildung des Verbindungsgliedes 11 gemäß Fig. 1 und 3 mit 35 und bei der Ausbildung des Verbindungsgliedes gemäß Fig. 5 - 7 mit 34 bezeichnet. Das in Fig. 4 vergrößert dargestellte Hebelgetriebe 70 steht in Eingriff mit dem Auslöserknopf 19 und ragt endseitig in die Befestigungsaufnahmen 12 - 14 hinein, wobei es in den Befestigungsaufnahmen 12 - 14 in Wirkeingriff mit dem Stößel 34,35 des jeweils in eine oder mehrere der Befestigungsaufnahmen 12-14 eingesetzten Verbindungsgliedes 11 gelangt. Hierzu sind drei zweiarmige Hebel 36,37,38 im Griffstück 10 bzw. in dessen Hohlraum 21 schwenkbar gelagert. Mit einem Hebelarm liegen die Hebel 36 - 38 unter Vorspannung durch den Federbügel 39 an dem Auslöserknopf 19 an. Mit dem anderen Arm ragen die Hebel 36 - 38 in jeweils eine der Befestigungsaufnahmen 12 - 14 derart, daß jeweils ihr freies Ende 40 - 42 in etwa auf einer der Bohrungsachse 25 - 27 liegt. Die Hebelschwenkachsen 43,44,45 sind dabei quer zu den Achsen der ihnen zugeordneten Befestigungsaufnahmen ausgerichtet. So liegt die Hebelschwenkachse 43 des Hebels 36 rechtwinklig zur Bohrungsachse 25, die Hebelschwenkachse 44 des Hebels 37 rechtwinklig zur Bohrungsachse 26 und die Hebelschwenkachse 45 des Hebels 38 rechtwinklig zur Bohrungsachse 27. Wird der Auslöserknopf 19 betätigt, so werden die Hebel 37 und 36 + 38 entgegen dem Uhrzeigersinn geschwenkt und ihr freies Ende 40 - 42 verschiebt sich im wesentlichen axial auf den Bohrungsachsen 26 - 27 um eine kleine Wegstrecke, die ausreicht, den mit einer der Bohrungsachsen 25 - 27 durch Einstecken eines Verbindungsgliedes 11 in das Griffstück 10 fluchtenden Stößel 34,35 axial zu verschieben, der dann den kameraseitigen Auslöser oder Auslösekontakt betätigt.

Bei dem Kamerahandgriff gemäß Fig. 1 ist das Verbindungsglied 11 als Tragplatte 46 ausgebildet, die eine einem Stativgewinde im Kameragehäuse zugeordnete Stativschraube 47 und einen quer abstehenden Bolzen 48 (Fig. 3) aufweist. Der Bolzen 48, der in Fig. 3 geschnitten dargestellt ist, steht nach unten von der Tragplatte 46 ab und ist mittels einer Schraube 49 in einer Sackbohrung der Tragplatte 46 lösbar gehalten. Der Bolzen 48 verjüngt sich zum freien Ende hin konisch und trägt dort einen den Hintergreifungsrand des Verbindungsgliedes 11 bildenden Ringflansch 50. Hinter diesen Ringflansch 50 kann der Sperrlappen 31 des Verriegelungskörpers 28 greifen. Der Bolzen 48 weist eine axiale Durchgangsbohrung 51 auf, die vorzugsweise als Stufenbohrung ausgeführt ist, in welcher der Stößel 35 verschieblich gehalten ist. Der Stößel 35 steht an der Oberseite der Tragplatte 46 vor. Gegen Herausfallen aus der axialen Durchgangsbohrung ist der Stößel 35 durch eine Schraubenfeder 52 gesichert, die sich einerseits an einer Schulter der Stufenbohrung 51 und andererseits an einem Ringflansch des Stößels 35 abstützt.

Der Bolzen 48 kann in die Befestigungsaufnahme 14 auf der oberen Stirnfläche 17 des Griffstücks 10 eingesteckt werden, wobei der Sperrlappen 31 des Verriegelungskörpers 28 in dessen Verriegelungsstellung den Ringflansch 50 hintergreift. Damit ist die Tragplatte 46 am Griffstück 10 gehalten und gleichzeitig liegt der Stößel 35 an dem freien Ende 42 des Hebels 38 im Hebelgetriebe 70 an. Der so fertige Handgriff wird mit der Tragplatte 46 an dem Boden des Kameragehäuses angesetzt, wobei die in der Tragplatte 46 gehaltene Stativschraube 47 in die am Kameragehäuseboden üblicherweise vorhandene Stativmutter eingeschraubt wird. Damit die Tragplatte 46 am Kameragehäuse nicht verdreht werden kann, sind auf der Oberseite der Tragplatte 46 zwei Warzen oder Nippel 53 angeordnet, die in entsprechende Vertiefungen im Kameragehäuse eingreifen können. Mit Befestigung der Tragplatte 46 am Boden des Kameragehäuses dringt gleichzeitig der Stößel 35 in eine am Kameragehäuse vorgesehene Aussparung ein, und gelangt dort in Berührungskontakt mit dem Kameraauslöserkontakt.

Wird nunmehr der Auslöser 19 gedrückt, so schwenken sämtliche Hebel 36 - 38 des Hebelgetriebes 70 in der vorstehend beschriebenen Weise. Da lediglich in der Befestigungsaufnahme 14 ein Verbindungsglied 11 in Form der Tragplatte 46 vorhanden ist, ist die Bewegung der Hebel 36 und 37 ohne Wirkung. Der Hebel 38 hingegen verschiebt den Stößel 35 um einen Betrag, der ausreicht, den Auslöserkontakt in der Kamera zu schließen. Wird der Auslöserknopf 19 wieder losgelassen , so schwenken die Hebel 36 - 38 unter der Wirkung des Federbügels 39 in ihre in Fig. 4 gezeigte Ausgangsstellung zurück. Der Stößel 35 wird von der Schraubenfeder 52 in seine Grundstellung zurückgeführt.

Die Tragplatte 46 weist noch zwei seitlich angeordnete von ihrer Oberfläche querabstehende Höcker 54 auf, die jeweils mit einer axialen Durchgangsbohrung 55 versehen sind. Stirnseitig tragen die Höcker Formnasen 56 und Formmulden 57. Sinn und Zweck dieser Höcker 54 wird weiter unten erläutert.

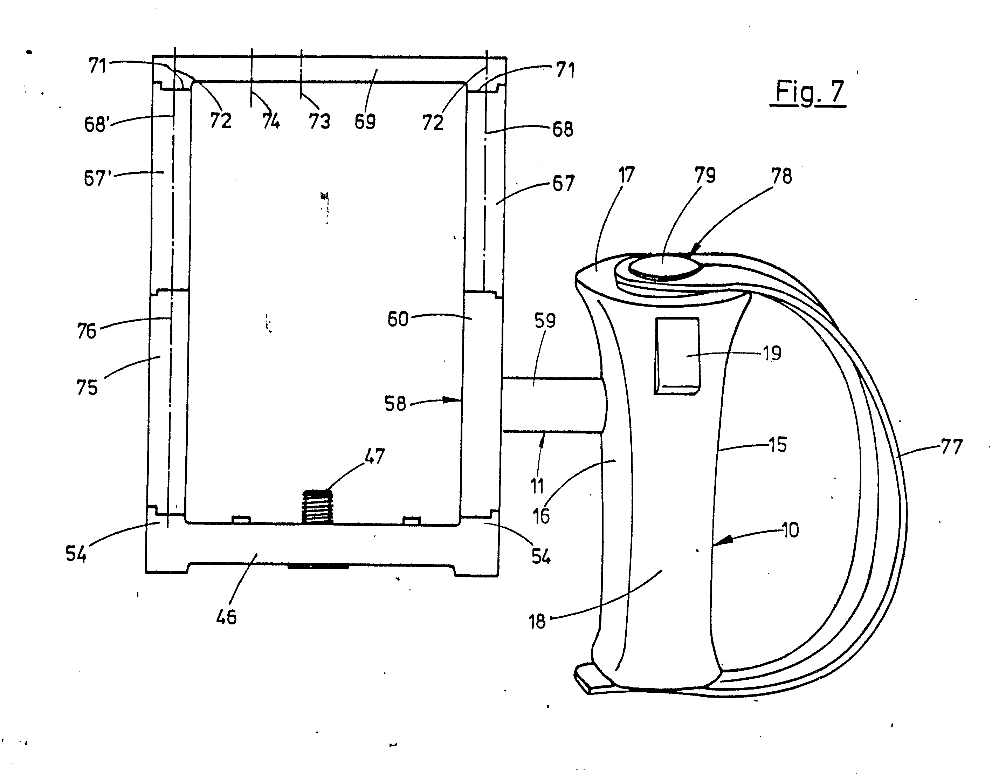

Bei den beiden Kamerahandgriffen gemäß Fig. 5 und 7 ist das Verbindungsglied als ein im wesentlichen T-förmiger Seitenhalter 58 ausgebildet, wie er in Fig. 6 als Einzelteil dargestellt ist. Der Seitenhalter 58 weist einen im wesentlichen zylinderförmigen Mittelteil 59 und einen Querteil 60 auf. Der Mittelteil 59 hat eine axiale Durchgangsbohrung 61, die ebenfalls vorzugsweise als Stufenbohrung ausgebildet ist. In dieser Durchgangsbohrung 61 ist der Stößel 34 gelagert und wird gegen Herausfallen durch eine den Stößel umgebende zylindrische Schraubenfeder 62, die sich einmal an einem Absatz der Stufenbohrung 61 und zum anderen an einem Ringflansch des Stößels 34 abstützt, gehalten. Das freie Ende des Mittelteils 59 verjüngt sich konisch und trägt einen den Hintergreifungsrand des Verbindungsgliedes 11 bildenden Ringflansch 63. Hinter diesem Ringflansch kann die Sperrnase 29 oder die Sperrnase 30 des Verriegelungskörpers 38 eingreifen, je nachdem, ob der Seitenhalter 58 von der linken Seitenfläche 15 (Fig. 5) oder der rechten Seitenfläche 16 (Fig. 7) des Griffstücks 10 absteht. Der Seitenhalter 58 wird mit dem konisch sich verjüngenden Ende des Mittelteils 59 wahlweise in eine der seitlichen Befestigungsaufnahmen 12 oder 13 eingeschoben und dann mittels des Verriegelungskörpers 28 durch Einschrauben der Stellschraube 32 festgelegt. Der Stößel 34 fluchtet dabei mit der Bohrungsachse 25 oder der Bohrungsachse 26 der Befestigungsaufnahme 12 oder 13 und liegt an dem freien Ende 40 bzw. 41 des Hebels 36 bzw. 37 an.

Der Querteil 60 des Seitenhalters 58 weist zwei Gewindebohrungen 64 mit axial ausgerichteter Bohrungsachse auf, die jeweils an einer der beiden Stirnseiten des Querteils münden. In diese Gewindebohrungen 64 können Steckschrauben eingeschraubt werden, die zur Befestigung des Seitenhalters 58 an der Tragplatte 46 dienen. Auf den beiden Stirnseiten des Querteils sind identische Formmulden 65 und Formnasen 66 vorhanden. Die Formnasen 66 sind den Formmulden 57 und die Formmulden 65 den Formnasen 56 auf den Höckern 54 der Tragplatte 46 angepaßt, so daß diese bei Aufsetzen der Stirnseite des Querteils 60 auf einen Höcker 54 formschlüssig ineinander greifen. Wird nunmehr noch durch die axiale Bohrung im Höcker 54 eine Steckschraube hindurchgeführt und in der Gewindebohrung 64 im Querteil 60 verschraubt, so entsteht ein Kamerahandgriff, wie er in Fig. 5 dargestellt ist. Der Bolzen 48 ist hier aus der Tragplatte 46 ausgeschraubt. Der Kamerahandgriff kann nunmehr mit der Tragplatte 46 an den Boden des Kameragehäuses angesetzt und dort mit der Stativschraube 47 befestigt werden. Dabei liegt der im Mittelteil 59 des Seitenhalters 58 gehaltene Stößel 34 mit seinem kameraseitigen Ende unmittelbar vor einem im Kameragehäuse seitlich angeordneten manuellen Auslöser. Wird nunmehr der Auslöserknopf 19 betätigt, so wird bei dem Handgriff gemäß Fig. 5 auch der Hebel 36 des Hebelgetriebes 70 verschwenkt. Da der Stößel 34 unmittelbar an dem freien Ende 40 des Hebels 36 anliegt, wird dieser verschoben und betätigt seinerseits den Auslöser im Kameragehäuse.

Bei dem Kamerahandgriff gemäß Fig. 7 ist wiederum der Seitenhalter 58 zu sehen, der dieses Mal an der rechten Seitenfläche 16 des Griffstücks 10 in die dort befindliche Befestigungsaufnahme 13 eingesteckt ist. Diese Handgriffvariante ist für Linkshänder und für eine Kamera mit Aufsichtsucher vorgesehen. Auch hier ist der Seitenhalter 58 über sein Querteil 60 mit der Tragplatte 46 verbunden. Im Gegensatz zu Fig. 5 wurde hierbei der andere Höcker 54 an die untere Stirnseite des Querteils 60 angesetzt und mittels Steckschraube befestigt. Auf die obere Stirnseite des Querteils 60 ist ein der Verlängerung des Querteils 60 dienendes Ansatzstück 67 mit seiner Stirnseite aufgesetzt. Dieses Ansatzstück weist eine Längsbohrung 68 auf, die durch die strichpunktierte Linie angedeutet ist. Die Stirnseiten des Ansatzstückes 67 sind ebenfalls mit Formmulden und Formnasen versehen, die formschlüssig in die Formnasen 66 und Formmulden 65 auf der oberen Stirnseite des Querteils 60 eingreifen. Durch die Längsbohrung 68 kann eine Steckschraube hindurchgeführt und in der Gewindebohrung 64 des Querteils 60 verschraubt werden. Der Handgriff gemäß Fig. 7 weist weiter noch eine Querschiene 69 mit zwei jeweils endseitig quer abstehenden Höckern 71 auf. Diese Höcker sind identisch den Höckern 54 auf der Tragplatte 46 ausgebildet. Sie weisen ebenfalls eine zentrale Durchgangsbohrung 72 und auf den freien Höckerflächen Formmulden und Formnasen auf. Diese Formmulden und Formnasen sind identisch mit den Formmulden und Formnasen 56 und 57 bzw. 65 und 66 der Höcker 64 bzw. des Querteils 60 des Seitenhalters 58 ausgebildet und so angeordnet, daß sie formschlüssig in die Formmulden und Formnasen auf der Stirnseite des Ansatzstückes 67 eingreifen, wenn der Höcker 71 auf diese aufgesetzt wird. Die Querschiene 69 und das Ansatzstück 67 werden durch eine Steckschraube am Seitenhalter 58 gehalten, die durch die Durchgangsbohrung 72 im Höcker 71,der Querschiene 69 und durch die Längsbohrung 68 im Ansatzstück 67 hindurchführt und in der Gewindebohrung 64 im Querteil 60 des Seitenhalters 58 verschraubt ist. Die Querschiene 69 weist noch Aufnahmelöcher 73 und 74 auf, die in Fig. 4 durch ihre Mittelachsen angedeutet sind. Diese Aufnahmelöcher 73 und 74 dienen zur Befestigung eines Blitzschuhs auf der Querschiene 69, so daß diese als Halter für ein Blitzgerät fungiert. Es ist aber auch möglich, andere bei der fotografischen Aufnahme benötigte Zusatzgeräte, vorzugsweise solche, die in einer bestimmten räumlichen Zuordnung zum Kameraobjektiv stehen müssen, auf der Querschiene 69 zu befestigen.

Eine weitere Ausbaumöglichkeit des Handgriffes in Fig. 7 wird durch ein Distanzstück 75 gegeben, die eine axiale Durchgangsbohrung mit Innengewinde trägt. Diese Gewindebohrung 76 ist in Fig. 7 durch ihre Mittelachse gekennzeichnet. Die beiden Stirnseiten des Distanzstückes 75 sind wiederum mit identischen Formmulden und Formnasen versehen. Das Distanzstück 75 ist mit einer Stirnseite auf einen Höcker 54 der Tragplatte 46 aufgesetzt und mit einer durch die Durchgangsbohrung 55 im Höcker 54 hindurchgeführten und in der Gewindebohrung 76 verschraubten Steckschraube an der Tragplatte 46 befestigt. Auf der anderen Stirnseite des Distanzstückes 75 ist ein weiteres Ansatzstück 67' aufgesetzt, das identisch dem Ansatzstück 67 ist. Auf der Stirnseite des zweiten Ansatzstückes 67' liegt der zweite Höcker 71 der Querschiene 69 auf. Mittels einer durch die Durchgangsbohrung 72 im Höcker 71, durch die Längsbohrung 68' im Ansatzstück 67' hindurchführenden und in der Gewindebohrung 76 verschraubten Steckschraube sind die Querschiene 69, das Ansatzstück 67' und das Distanzstück 75 miteinander fest verbunden.

Wie aus Fig. 7 ersichtlich, bilden nunmehr der Querteil 60 des Seitenhalters 58, die Tragplatte 46, das Distanzstück 75, das zweite Ansatzstück 67', die Querschiene 69 und das Ansatzstück 67 einen starren Rahmen, der das Kameragehäuse umgibt. Die Kamera wird am Gehäuseboden wiederum über die Stativschraube 47 mit der Tragplatte 46 verbunden. Damit liegt der im Seitenteil 58 geführte Stößel 34 unmittelbar an dem im Kameragehäuse links eingelassenen Kameraauslöser, der von diesem bei Eindrücken des Auslöserknopfes19 am Griff-Stück 10 betätigt wird.

Die in der oberen Stirnfläche 17 des Griffstücks 10 mündende Befestigungsaufnahme 14 dient bei dem Handgriff gemäß Fig. 7 zur Befestigung einer Handschlaufe 77 am Griff-stück 10. Hierzu ist ein dem Bolzen 48 in seinem freien, sich konisch verjüngenden Ende konturenmäßig identisch nachgebildeter Zapfen 78 vorgesehen, der in die Befestigungsaufnahme 14 eingesteckt und durch den Sperrlappen 31 gehalten wird. Der Zapfen 78 trägt eine im Durchmesser größere Anpreßscheibe 79, die durch einen Schlitz in der Handschlaufe 77 hindurchgesteckt wird. Die Anpreßscheibe 79 preßt dann bei verriegeltem Zapfen 78 die Handschlaufe an die Stirnfläche 17 des Griffstücks 10 an.

Rollei-Werke

Franke & Heidecke

  GmbH & Co KG                          6.8.1979

3300 Braunschweig


                    Patentansprüche


1. Kamerahandgriff zur lösbaren Verbindung mit einer Kamera, mit einem Griffstück mit seitlicher Befestigungsaufnahme und mit einem Verbindungsglied zwischen Griffstück und Kameragehäuse, das über die Befestigungsaufnahme lösbar mit dem Griffstück verbunden ist und am Kameragehäuse festgelegt werden kann, d a d u r c h   g e k e n n z e i c h n e t , daß das Griffstück (10) eine weitere seitliche, vorzugsweise der ersten Befestigungsaufnahme (12) gegenüberliegend angeordnete, Befestigungsaufnahme (13) und eine zusätzliche, von seiner oberen Stirnfläche (17) aus zugängliche Befestigungsaufnahme (14) für das Verbindungsglied (11) aufweist.

2. Handgriff nach Anspruch 1, d a d u r c h   g e k e n n - z e i c h n e t , daß im Griffstück (10) ein Verriegelungskörper (28) angeordnet ist, der in seiner Verriegelungsstellung in die Befestigungsaufnahmen (12 - 14) mit Sperrlappen (29 - 31) hineinragt, die zum Hintergreifen eines an dem Verbindungsglied (11) angeordneten Hintergreifungsrandes (50; 63) ausgebildet sind.

3. Handgriff nach Anspruch 2, d a d u r c h  g e k e n n - z e i c h n e t , daß am Verriegelungskörper (28) eine diesen in Verriegelungsstellung überführende Stellschraube (32) und eine diesen aus der Verriegelungsstellung rückführende Rückstellfeder (33) angreifen.

4. Handgriff nach einem der Ansprüche 1 - 3, mit einem am Griffstück angeordneten Auslöserknopf und mit einem im Verbindungsglied axial verschieblichen Stößel, der die Bewegung des Auslöserknopfes auf einen am Kameragehäuse angeordneten Auslöser oder Auslöserkontakt überträgt, d a - d u r c h  g e k e n n z e i c h n e t , daß im Griff- stück (10) ein mit dem Auslöserknopf (19) in Eingriff stehendes Hebelgetriebe (70) angeordnet ist, das endseitig in die Befestigungsaufnahmen (12 - 14) hineinragt und dort in Wirkeingriff mit dem Stößel (34; 35) des Verbindungsgliedes (11) treten kann.

5. Handgriff nach Anspruch 4, d a d u r c h  g e k e n n - z e i c h n e t , daß das Hebelgetriebe (70) drei schwenkbar gelagerte zweiarmige Einzelhebel (36 - 38) aufweist, die mit einem Hebelarm, vorzugsweise unter Vorspannung, an dem schwenkbar im Griffstück (10) gehaltenen Auslöserknopf (19) anliegen und mit dem freien Ende ihres anderen Hebelarms jeweils in einer Achse (25 - 27) der Befestigungsaufnahmen (12 - 14) liegen.

6. Handgriff nach Anspruch 5, d a d u r c h  g e k e n n - z e i c h n e t , daß die Hebelschwenkachsen (43 - 45) quer zu den Achsen der den Einzelhebeln (36 - 38) jeweils zugeordneten Befestigungsaufnahmen (12 - 14) ausgerichtet sind.

7. Handgriff nach einem der Ansprüche 1 - 6, d a d u r c h g e k e n n z e i c h n e t , daß die Befestigungsauf- nahmen (12 - 14) einen gemeinsamen, zentralen Hohlraum (21) und jeweils eine in den Hohlraum (21) mündende Bohrung (22-24) zum Einschieben des Verbindungsgliedes (11) aufweisen, wobei die Bohrungsachsen (25 - 27) die Achsen der Befestigungsaufnahmen (12 - 14) bilden, und daß das Hebelgetriebe (70) und der Verriegelungskörper (28) in dem Hohlraum (21) angeordnet sind.

8. Handgriff nach einem der Ansprüche 4 - 7, d a d u r c h g e k e n n z e i c h n e t , daß das Verbindungsglied (11) als ein im wesentlichen T-förmiger Seitenhalter (58) mit vorzugsweise zylinderförmigem Mittelteil (59) ausgebildet ist, daß das Mittelteil (59) eine den Stößel (34) aufnehmende, mit der Achse (25, 26) mindestens einer Befestigungsaufnahme (12, 13) im Griffstück (10) fluchtende axiale Durchgangsbohrung (61), vorzugsweise Stufenbohrung, aufweist und an seinem, sich vorzugsweise konisch verjüngenden, freien Ende einen den Hintergreifungsrand bildenden Ringflansch (63) trägt, und daß der zum Festlegen des Seitenhalters (18) am Kameragehäuse dienende Querteil (60) an den Stirnseiten mündende Gewindebohrungen (64) mit axialer Bohrungsachse aufweist, in welche zur kameraseitigen Befestigung dienende Steckschrauben eingeschraubt werden können.

9. Handgriff nach Anspruch 8, d a d u r c h g e k e n n z e i c h n e t , daß die Stirnseiten des Querteiles (60) mit Formmulden (57) und/oder Formnasen (56) versehen sind.

10. Handgriff nach einem der Ansprüche 4 - 9, d a d u r c h g e k e n n z e i c h n e t , daß das Verbindungsglied (11) als Tragplatte (46) ausgebildet ist, die eine einem Stativgewinde im Kameragehäuse zugeordnete Stativschraube (47) und einen quer abstehenden, sich vorzugsweise zum freien Ende hin konisch verjüngenden Bolzen (48) trägt, und daß der Bolzen (48) eine einen mit der Achse (27) der im Griffstück (10) stirnseitigen Befestigungsaufnahme ( 14) fluchtenden Stößel (35) aufnehmende, axiale Durchgangsbohrung (51), vorzugsweise Stufenbohrung, und am freien Ende einen den Hintergreifungsrand bildenden Ringflansch (50) aufweist.

A 1170

0024478

Fig. 1

Fig. 2

Fig. 6

Fig. 3

A 1170

0024478

Fig. 4

Fig. 5

Fig. 7

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - B - 1 255 477 (GRAFLEX)<br>+ Spalte 4, Zeilen 1-45; Spalte 6, Zeilen 25-40; Fig. 1 +<br>-- | 1-3,8 |
| | DE - B - 1 281 259 (ROBINSON)<br>+ Spalte 6, Zeile 46 - Spalte 7, Zeile 15; Fig. 6 +<br>-- | 10 |
| | CH - A - 4 05 925 (AGFA)<br>+ Fig. 5, 6,7 +<br>-- | 4 |
| A | US - A - 4 097 883 (ADAMSKI)<br>+ Gesamt +<br>-- | |
| A | AT - B - 229 715 (BAUER)<br>+ Gesamt +<br>---- | |

**KLASSIFIKATION DER ANMELDUNG (Int. Cl.³)**

G 03 B 17/56

**RECHERCHIERTE SACHGEBIETE (Int. Cl.³)**

G 03 B 17/00
G 03 B 19/00
G 03 B 29/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | · Der vorliegende Recherchenbericht wurde für alle Patentansprüche erstellt. |
|---|---|

| Recherchenort | Abschlußdatum der Recherche | Prüfer |
|---|---|---|
| WIEN | 03-12-1980 | IRSIGLER |

EPA form 1503.1  06.78